Europäisches Patentamt

(19) European Patent Office

Office européen des brevets

(11) Publication number: **0 242 014 B1**

# EUROPEAN PATENT SPECIFICATION

(45) Date of publication of patent specification: **27.02.91**    (51) Int. Cl.⁵: **G01N 27/417**

(21) Application number: **87300406.3**

(22) Date of filing: **19.01.87**

(54) Exhaust oxygen sensor with external/internal retainer means.

(30) Priority: **19.02.86 US 830732**

(43) Date of publication of application:
**21.10.87 Bulletin 87/43**

(45) Publication of the grant of the patent:
**27.02.91 Bulletin 91/09**

(84) Designated Contracting States:
**DE FR GB**

(56) References cited:
**DE-A- 3 041 581      DE-A- 3 509 196
US-A- 3 844 920      US-A- 4 159 234
US-A- 4 175 019      US-A- 4 208 266**

(73) Proprietor: **GENERAL MOTORS CORPORA-
TION
General Motors Building 3044 West Grand
Boulevard
Detroit Michigan 48202(US)**

(72) Inventor: **Fouts, Richard E.
9350 Greentree
Grand Blanc Michigan 48439(US)**
Inventor: **Hackett, Fred L.,Jr.
1417 Cardinal
Burkburnett Texas 76354(US)**

(74) Representative: **Haines, Arthur Donald et al
Patent Section Vauxhall Motors Limited 1st
Floor Gideon House 26 Chapel Street
Luton, Bedfordshire LU1 2SE(GB)**

## Description

### Field of the Invention

This invention relates to exhaust oxygen sensors of the type used in the exhaust system of an internal combustion engine and, in particular, to an exhaust oxygen sensor with an outer water shield secured to an inner shield of the exhaust oxygen sensor assembly.

### Description of the Prior Art

Exhaust oxygen sensors of the type as disclosed, for example, in US-A-3,844,920 or in US-A-4,175,019, that are constructed for use in the exhaust system of an internal combustion engine to, in effect, provide an electrical signal relative to the oxygen content in the exhaust gases discharged from the engine, are well known. Such oxygen sensors are normally of the solid electrolyte galvanic type that essentially include an oxygen-ion-conductive ceramic body with porous electrodes on opposite inner and outer surfaces of the body. One electrode is exposed to a reference source of oxygen. The other electrode is exposed to a source, such as exhaust gases, whose oxygen content is to be measured. A difference in oxygen partial pressure at the electrodes results in a corresponding electrode potential difference, providing a sensor electrical output voltage.

The electrical output voltage of such a sensor is then used to provide a signal relative to the amount of oxygen contained in the exhaust gases discharged from an engine during the operation of the engine. This voltage signal, together with other signals relative to other operating conditions of an engine are used to monitor and control the combustion process in the engine in a manner as disclosed, for example, in US-A-4,270,503.

In recent years, an oxygen sensor has been commercially available which, although somewhat structurally similar to that disclosed in the above-identified U.S. patent 4,175,019, also included an outer metal shield encircling the inner shield of this patented structure, with this outer shield having a radial flange that is secured by welding to the tubular body of the oxygen sensor, this oxygen sensor being used in certain vehicle applications at a location at which the oxygen sensor is subjected to moderate water splash or spray. However, the welds used to secure such an outer shield not only detract from the overall appearance of the oxygen sensor but are also costly to produce and require the use of a special welding machine to effect such welding on a mass production basis.

### Summary of the Invention

The present invention relates to an oxygen sensor in accordance with claim 1.

It is therefore a primary object of this invention to provide an improved oxygen sensor of the type having both an inner shield and an outer shield wherein the outer shield is secured to the inner shield by a self-locking, push-on type, internal/external retainer means.

Another object of the invention is to provide an improved method of securing an outer shield to an inner shield of an oxygen sensor by the use of a self-locking, push-on type, internal/external retainer means in the form of separate internal retainer and external retainer rings.

Still a further object of this invention is to provide an improved oxygen sensor having a unitary, self-locking, push-on type, internal/external retainer means securing an outer shield to an inner shield of the oxygen sensor.

For a better understanding of the invention as well as other objects and features thereof, reference is had to the following detailed description of the invention to be read in connection with the accompanying drawings.

### Brief Description of the Drawings

Figure 1 is a longitudinal sectional view of an oxygen sensor of the type for use in the exhaust system of an internal combustion engine with an outer shield thereof being secured to an inner shield of a sensor assembly by an internal/external retainer means in accordance with a first embodiment of the invention, that is, by separate internal and external retainer rings;

Figure 2 is an enlarged top view of the internal retainer ring, per se , of the Figure 1 internal/external retainer means;

Figure 3 is a section view of the internal retainer ring taken along line 3-3 of Figure 2;

Figure 4 is an enlarged top view of the external retainer ring, per se , of the Figure 1 internal/external retainer means;

Figure 5 is a section view of the external retainer ring taken along line 5-5 of Figure 4;

Figure 6 is a view, partly in section, of a portion of the oxygen sensor of Figure 1 with the outer shield thereof being secured to the inner shield by an internal/external retainer means in accordance with an alternate, second embodiment of the invention wherein the internal/external retainer ring is of a unitary construction;

Figure 7 is an enlarged bottom view of the internal/external retainer, per se , of Figure 6; and,

Figure 8 is a sectional view of the internal/external retainer ring of Figure 7 taken along line 8-8 of Figure 7.

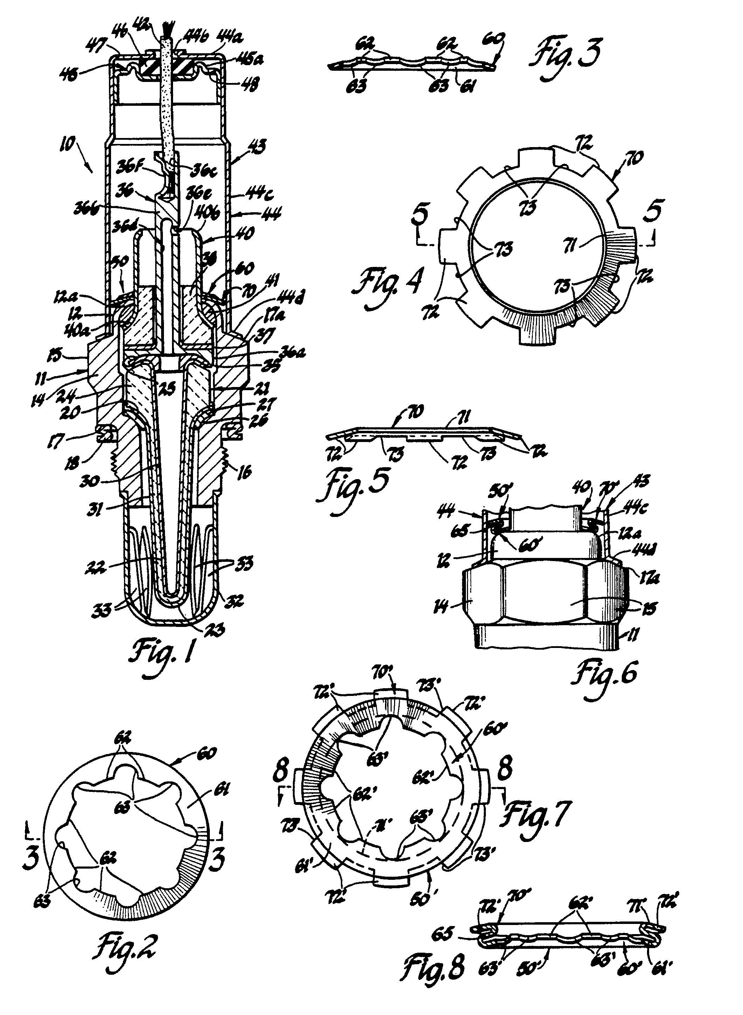

Referring first to Figure 1, there is shown an oxygen sensor 10 of the type used in the exhaust system of an internal combustion engine and which is functionally similar to known types of sensor, such as for example, a sensor of the type disclosed in the above-identified United States patents 3,844,920 and 4,175,019.

Thus, in the construction shown, the oxygen sensor 10 includes a shell-like sensor body 11 having a stepped external configuration that includes an upper rim portion 12, an upper intermediate enlarged head portion 14 with external plural flats 15 to define an external wrenching head and a lower externally-threaded portion 16 used to secure the oxygen sensor to, for example, an exhaust pipe, not shown. The head portion 14 and the lower externally-threaded portion 16 are interconnected by a radial flat shoulder 17 which serves as an abutment shoulder for a captive gasket 18, as is conventional in the art. As shown, the sensor body 11 is also provided with a stepped bore therethrough which defines an intermediate, annular arcuate-shaped, internal, support shoulder 20.

An element 21, made, for example, of ceramic zirconia is located in and supported within the sensor body 11 by the shoulder 20 in a manner to be described. The ceramic zirconia element 21 is in the form of a hollow, pencil-like, closed-ended tube. As illustrated, the ceramic zirconia element 21 has a thin wall portion 22 that tapers from the thinnest section thereof that begins at the small diameter closed end 23 thereof, and terminates in an upper thicker-walled and enlarged diameter section 24 which defines upper and lower shoulders 25 and 26, respectively. As shown, the lower shoulder 26 is of a complimentary configuration to that of shoulder 20 so as to abut against a metal, lower, washer-like gasket 27 sandwiched therebetween. Catalytic porous platinum electrodes 30 and 31 cover selected inner and outer surfaces, respectively, of the ceramic zirconia element 21. Thus as illustrated, the inner electrode 30 extends up to and over part of the upper shoulder 25 while the outer electrode 31 extends up onto the lower shoulder 26, with these electrodes thus being physically separated by the uncoated outer peripheral surface of the enlarged diameter section 24 of the ceramic zirconia element 21.

The element 21 with the coated inner and outer electrodes 30 and 31, respectively, constitutes an electrolyte sensor means.

A cup-shaped lower metal shield 32 is suitably secured, as by welding, to the lower end of the sensor body 11. As conventional, this metal shield 32 is suitably pierced so as to provide louvers 33 for the ingress and egress of exhaust gases where-

by the outer electrode 31 will be exposed to the exhaust gases.

A washer-like intermediate seal gasket 35, made, for example, of copper is located so as to abut against the surface of the inner electrode 30 on the upper shoulder of the element 21 and a bottom surface of a lower flange portion 36a of an electrode terminal member 36 is located so as to abut against the upper surface of this intermediate seal gasket 35. A spring washer 37 is disposed on the upper surface of the lower flange portion 36a of the electrode terminal member 36.

An electrical insulator ring 38 made, for example, of a suitable ceramic material is positioned to abut the spring washer 37 and to loosely and concentrically encircle an upstanding stem 36b portion of the electrode terminal member 36. An outwardly-flared lower end 40a of a metal, tubular, inner shield 40 abuts against an arcuate outer peripheral portion of the insulator ring 38 with an annular metal upper gasket 41 encircling the flared lower end 40a of the inner shield 40 whereby, upon rolling or crimping over of the top end of the upper rim portion 12 of the sensor body 11, there is provided a radially inwardly extending annular flange 12a used to sealingly secure these elements together and to effect their axial retention.

As shown, the electrode terminal member 36 is provided with opposed upper and lower blind bores 36c and 36d, respectively, and with a side port 36e in its stem portion 36b located so as to open into the lower blind bore 36d whereby these last two elements define an air flow passage into the interior of the previously described electrolyte sensor means.

In the construction shown, the upper blind bore 36c is adapted to receive one end of an electrical cable 42, this one end of the electrical cable 42 being stripped of insulation so that its bare wires will make electrical contact with the electrode terminal member 36, with a portion of the wall of the stem 36b portion being crimped radially inwards as at 36f and then the opposite portion of this wall and the bare wires being welded together as by laser beam welding so as to secure the electrical cable 42 to the electrode terminal member 36 and to ensure the proper electrical contact therewith. The electrode terminal member 36 and the electrical cable 42 thus define an electrode terminal means of the oxygen sensor.

The oxygen sensor 10, in addition to the inner shield 40, is also provided with an outer shield assembly, generally designated 43, for use in certain engine exhaust system applications wherein the oxygen sensor 10 would be subjected to moderate water splash or spray.

In the construction illustrated, the outer shield assembly 43 includes an inverted cup-shaped, metal outer shield 44 having a base 44a with a central aperture 44b therethrough and an annular, depending stepped cylindrical wall 44c that terminates at its lower end in an annular, downwardly-inclined and radially outwardly extending flange 44d formed complimentary to an upper inclined shoulder l7a of the sensor body ll. A centrally-apertured, inverted cup-shaped, metal retainer 45 is suitably secured, as by a press fit, in the outer shield 44 so as to compress a washer-like gasket 46 into sealing engagement with these elements and with the electrical cable 42 that extends outboard through these apertured elements. In addition, both the base 44a of the outer shield 44 and a base 45a of the retainer 45 are provided with apertures 47 and 48, respectively, that are located preferably diametrically opposite to each other as shown, whereby the interior of the outer shield 44 and the port 36e in the electrical terminal post 36 will be in flow communication with atmospheric air.

The oxygen sensor l0, thus far described, is of conventional construction and also, as previously described, in such a prior assembly, the outer shield assembly 43 has been secured in unit assembly with the other elements of the oxygen sensor by welding the lower flange of the outer shield 44 of this assembly to the sensor body ll.

Now in accordance with a feature of the present invention, such unit assembly of the outer shield assembly 43 to the remaining elements of the oxygen sensor is accomplished by the use of a self-locking, internal/external retainer means that is operatively associated with the outer shield 44 and inner shield 40 in a manner to be described hereinafter.

The self-locking, internal/external retainer means, generally designated 50, in the embodiment shown in Figure l, is in the form of two separate retainer rings, one of which is an internal retainer ring 60, as best seen in Figures 2 and 3, and the other is an external retainer ring 70, as best seen in Figures 4 and 5.

The internal retainer ring 60 made of spring metal, in the construction illustrated in Figures 2 and 3, is in the form of a frusto-conical shaped ring 6l with its internal peripheral surface provided with inwardly-extending, circumferentially spaced-apart teeth 62 with interdental radiused spaced grooves 63. The nominal, as formed, internal diameter between opposed sets of teeth 62 is preselected so as to be a predetermined amount less than the external diameter of the straight-walled portion of the inner shield 40. The internal retainer ring 60 is thus constructed so as to be functionally similar to well known push-on nut type fasteners.

The external retainer ring 70, in the construction shown in Figures 4 and 5, is also made of spring metal in the form of a frusto-conical shaped ring 7l with its external peripheral surface provided with outwardly-extending, circumferentially spaced-apart teeth 72 with interdental spaced grooves 73. The nominal, as formed, external diameter between opposed sets of teeth 72 is preselected so as to be a predetermined amount greater than the internal diameter of the lower straight-walled portion of the outer shield 44. As thus constructed, the external retainer ring 70, in effect, may be described as an external type, push-on nut fastener.

As best seen in Figure l, the external diameter of the ring 6l portion of the internal retainer ring 60 is substantially less than the internal diameter of the lower straight-walled portion of the outer shield 44 so as to be loosely received therein while the internal diameter of the ring 7l portion of the external ring 70 is substantially greater than the external diameter of the straight-walled portion of the inner shield 40 so that the external retainer ring 70 can be positioned to loosely encircle the inner shield.

However, the external diameter of the ring 6l portion of the internal retainer ring 60 is preselected relative to the internal diameter of the ring 7l portion of the external retainer ring 70 whereby, in their installed position as shown in Figure l, the solid annular portion of ring 6l will overlie the solid annular portion of ring 7l so that the internal retainer ring 60 will be operative to axially retain the external retainer ring 70 in the seated position in abutment against the annular flange l2a of the sensor body ll, the position shown in Figure l.

To effect unit assembly of the outer shield assembly 43 and, in particular, the outer shield 44 portion thereof with the remaining elements of the oxygen sensor, the external retainer ring 70 is first positioned, with its teeth 72 extending downwards with reference to Figure l, so that it encircles the inner shield 40 and abuts against the flange portion l2a of the sensor body ll. The internal retainer ring 60 is then positioned, with its teeth 62 extending upwards, down over the inner shield 40, this shield preferably having its upper lip end 40b rolled inwards to facilitate assembly of the internal retainer ring 60 thereon, and then is pressed downwards, as by a hollow-ended tubular hand tool, not shown, until the internal retainer ring 60 abuts against the external retainer ring 70.

As the internal retainer ring 60 is thus moved to its final attached position as shown in Figure l, the teeth 62 are flexed radially outwards by engagement with the outer peripheral surface of the inner shield 40 so that they are tensioned in final position whereby the lower free end edge of each of these teeth 62 is, in effect, caused to dig into the outer peripheral surface of the inner shield 40 under spring tension in what may be referred to as a self-locking action. It will be appreciated that if, thereafter, an axial force is applied to the internal retainer ring 60 in an upward direction with reference to Figure I, such a force will then tend to cause these edges of the teeth 62 to further dig into the outer surface of the inner shield.

Thereafter, the outer shield 44 of the outer shield assembly 43 is positioned so as to encircle the inner shield 40 and then it is pressed down so that its lower open end fits over the external retainer ring 70 with the flange 44d in abutment against the shoulder I7a of the sensor body as shown in Figure I.

In the same manner as described hereinabove in regard to the internal retainer ring 60, as the external retainer ring 70 is thus moved relative to the outer shield 44 to its final attached portion shown in Figure I, the teeth 72 are flexed radially inwards by engagement with the inner peripheral wall of the outer shield 44 so that they are tensioned, whereby the upper free end edge of each of these teeth 72 is, in effect, caused to dig into the inner peripheral wall of the outer shield 44 under spring tension in what may be referred to as a self-locking action. As before, if thereafter an axial force is applied to the external retainer ring 70 in an upward direction with reference to Figure I, for example, as applied to the outer shield 44, this force will then tend to cause these edges of the teeth 72 to further dig into the inner peripheral surface of the outer shield 44.

A second embodiment which utilizes the principles of the present invention is shown in Figures 6, 7 and 8, wherein similar parts are designated by similar numerals but with the addition of a suffix (prime) where appropriate.

In this second embodiment, an internal/external retainer means 50′ in the form of an integral part of spring metal is used and it includes, with reference to Figure 6, an upper, external retainer ring portion 70′ and a lower, internal retainer ring portion 60′ with the inner and outer peripheral edges, respectively, of their ring portions 71′ and 61′, respectively, interconnected by a return bent, annular flange 65, as best seen in Figures 6 and 8.

As shown in Figure 7, the internal retainer ring portion 60′ is preferably angularly aligned relative to the external retainer ring portion 70′ so that each of the teeth 62′ thereof is substantially radially aligned with one of the spaced grooves 73′ ·of the external retainer ring portion 70′ and, correspondingly, each of the teeth 72′ of the external retainer ring portion 70′ is substantially radially aligned with one of the spaced grooves 63′ of the internal retainer ring portion 60′. Thus, preferably, both the internal and external ring portions 60′ and 70′, respectively, are provided with equal numbers of teeth 62′ and 72′, respectively, with each having eight such teeth in the construction illustrated.

As described with reference to the embodiment of the internal/external retainer means 50 of the Figures I-5 embodiment, in this second embodiment the internal retainer ring portion 60′ is also of a frusto-conical configuration whereby in its installed position it is arranged so that the lower free edge of each of its teeth 62′ will tend to dig into the outer peripheral surface of the inner shield 40 and the external retainer ring portion 70′ is also of a frusto-conical configuration whereby in its installed position it is arranged so that the upper free edge of each of the teeth 72′ will tend to dig into the inner peripheral surface of the outer shield 44.

In this second embodiment, in order to effect attachment of the outer shield assembly 43, the internal/external retainer means 50′ is first positioned with the internal retainer ring portion 60′ thereof facing the upper free end of the inner shield 40 and then it is pushed axially down over the inner shield 40 until the solid annular ring portion 6I′ of the internal retainer ring portion 60′ thereof abuts against the flange portion I2a of the sensor body II, the position shown in Figure 6. Thereafter the outer shield assembly 43 and, in particular, the outer shield 44 thereof is axially pushed down over the external retainer ring portion 70′ of the internal/external retainer means 50′ in the same manner as previously described with reference to the Figures I-5 embodiment.

It will now be apparent that by use of a retainer means in accordance with the invention, an outer shield assembly can be fixed in unit assembly to other elements of an oxygen sensor and that, since such a retainer means will be located within the outer shield assembly, its use will not effect the overall appearance of the complete oxygen sensor assembly.

## Claims

1. An oxygen sensor (I0) having a tubular sensor body (I4), an electrolyte sensor element (2I) supported in the sensor body (I4) and having one surface (3I) thereof in electrical operative connection to the sensor body (I4), an electrode terminal (36) in electrical operative connection with a second surface (30) of the electrolyte sensor element (2I), an electrical insulator ring (38) encircling a portion of the electrode terminal (36) within the sensor body (I4), a metal, tubular, inner shield (40) encircling the electrical insulator ring (38) and retained by a flanged portion (I2a) of the sensor body (I4), and an outer shield assembly (43) including an inverted cup-shaped, metal, outer shield (44) encircling the inner shield (40) and in abutment with the sensor body (I4), characterised in that

said inner shield (40) supports a self-locking, push-on type, retainer means (60,70; 60'70') having circumferentially spaced-apart, radially inwardly-extending teeth (62; 62') that operatively grip the outer peripheral surface of said inner shield (40), and circumferentially spaced-apart, radially outwardly-extending teeth (72;72') that operatively dig into the inner peripheral surface of said outer shield (44).

2. An oxygen sensor according to claim l, characterised in that said retainer means comprises an external retainer ring (70) in the form of a frusto-conical shaped ring having spaced-apart outer peripheral teeth (72) with interdental grooves (73), which ring is operatively positioned to encircle said inner shield (40) so as to abut against said sensor body (l4), adjacent to said inner shield; and an internal retainer ring (60) in the form of a frusto-conical shaped ring having spaced-apart inner peripheral teeth (62) with interdental grooves (63), which ring is operatively positioned around said inner shield (40) in a position to prevent axial movement of said external retainer ring (70) and so that said inner peripheral teeth (62) engage against the outer peripheral surface of said inner shield (40).

3. An oxygen sensor according to claim l, characterised in that said retainer means is an integral element (50') that includes an internal frusto-conical ring portion (60') having spaced-apart inner peripheral teeth (62') with interdental grooves (63'); an external frusto-conical ring portion (70') having spaced-apart external peripheral teeth (72') with interdental grooves (73'); and a return bent, annular flange (65) interconnecting said internal retainer ring portion (60') with said external retainer ring portion (70').

## Revendications

1. Détecteur d'oxygène (10), comprenant un corps tubulaire de détecteur (14), un élément de détection d'électrolyte (21), qui est soutenu dans ce corps de détecteur (14) et dont l'une des surfaces (31), est en liaison de coopération électrique avec ce corps de détecteur (14), une cosse d'électrode (36), en liaison de coopération électrique avec une seconde surface (30) de l'élément de détection d'étlectrolyte (21), une bague d'isolation électrique (38), entourant une partie de cette cosse d'électrode (36) à l'intérieur du corps de détecteur (14), une chemise métallique tubulaire intérieure (40), entourant cette bague d'isolation électrique (38) et retenue par une partie formant collet (12a) du corps de détecteur (14), et un ensemble de chemise extérieure (43) comprenant une chemise métallique extérieure (44), en forme de gobelet renversé, qui entoure la chemise intérieure (40) et vient en appui sur le corps de détecteur (14), caractérisé en ce que la chemise intérieure (40) soutient des moyens de retenue du type à mise en place par poussée et à autoblocage (60, 70 ; 60', 70') comprenant des dents (62 ; 62'), s'étendant radialement vers l'intérieur et espacées dans le sens circonférentiel, qui s'accrochent en coopération fonctionnelle sur la surface périphérique extérieure de la chemise intérieure (40) et des dents (72 ; 72'), s'étendant radialement vers l'extérieur et espacées dans le sens circonférentiel, qui s'enfoncent en coopération fonctionnelle dans la surface périphérique intérieure de la chemise extérieure (44).

2. Détecteur d'oxygène suivant la revendication 1, caractérisé en ce que les moyens de retenue comprennent une rondelle de retenue extérieure (70) se présentant sous la forme d'un anneau de forme tronconique comportant des dents périphériques extérieures espacées (72), avec des découpes (73) formant entre-dents, cette rondelle étant positionnée en coopération fonctionnelle de façon à entourer la chemise intérieure (40) et de manière à être appliquée en appui sur le corps de détecteur (14) en un emplacement contigu à la chemise intérieure, et une rondelle de retenue intérieure (60) se présentant sous la forme d'un anneau de forme tronconique comportant des dents périphériques intérieures espacées (62), avec des découpes (63) formant des entre-dents, cette rondelle étant positionnée en coopération fonctionnelle autour de la chemise intérieure (40) dans une position empêchant un déplacement axial de cette rondelle de retenue extérieure (70) et d'une manière telle que ses dents périphériques intérieures (62) s'accrochent sur la surface périphérique extérieure de la chemise intérieure (40).

3. Détecteur d'oxygène suivant la revendication 1, caractérisé en ce que les moyens de retenue sont constitués par un élément (50'), d'une seule pièce, qui comprend une partie formant rondelle tronconique intérieure (60'), comportant des dents périphériques intérieures espacées (62') avec des découpes (63') formant des entre-dents, une partie formant rondelle tronconique extérieure (70') comportant des dents périphériques extérieures espacées (72'), avec des découpes (73') formant des entre-dents, et une couronne annulaire (65) repliée en U, qui réunit entre elles cette partie formant rondelle de retenue intérieure (60') et cette partie formant rondelle de retenue extérieure (70').

## Ansprüche

1. Sauerstoffsensor (10) mit einem rohrförmigen Sensorgehäuse (14), einem Elektrolyt-Sensorelement (21), das in dem Sensorgehäuse (14) abgestützt ist und mit einer seiner Flächen (31) in elektrischer Wirkverbindung mit dem Sensorgehäuse (14) ist, einer Elektrodenklemme (36) in elektrischer Wirkverbindung mit einer zweiten Fläche (30) des Elektrolyt-Sensorelements (21), wobei ein elektrischer Isolatorring (38) einen Abschnitt der Elektrodenklemme (36) innerhalb des Sensorgehäuses (14) umgibt, ein metallener rohrförmiger Innenschirm (40) den elektrischen Isolatorring (38) umgibt und durch einen mit Flansch versehenen Abschnitt (12a) des Sensorgehäuses (14) zurückgehalten ist, und eine äußere Schirmanordnung (43) mit einem metallenen Außenschirm (44) in Form einer umgekehrten Schüssel den Innenschirm (40) umgibt und an dem Sensorkörper (14) anliegt, dadurch gekennzeichnet, daß der Innenschirm (40) ein selbstrastendes Aufschiebe-Haltemittel (60,70;60',70') abstützt mit in Umfangsrichtung voneinander Abstand aufweisenden, sich radial nach innen erstrekkenden Zähnen (62; 62'), die wirksam die Außenumfangsfläche des Innenschirms (40) greifen und mit in Umfangsrichtung mit Abstand voneinander angeordneten, sich radial nach außen erstreckenden Zähnen (72;72'), die sich wirksam in die Innenumfangsfläche des Außenschirms (44) eingraben.

2. Sauerstoffsensor nach Anspruch 1, dadurch gekennzeichnet, daß das Haltemittel einen äußeren Haltering (70) in Form eines kegelstumpfförmigen Rings mit voneinander Abstand aufweisenden Außenumfangszähnen (72) mit Zwischenzahn-Nuten (73) ist, welcher Ring wirksam angeordnet ist, den Innenschirm (40) so zu umgeben, daß er gegen das dem Innenschirm benachbarte Sensorgehäuse (14) anliegt; und einen inneren Haltering (60) in Form eines kegelstumpfförmigen Rings mit Abstand voneinander aufweisenden Innenumfangszähnen (62) mit Zwischenzahn-Nuten (63), welcher Ring wirksam um den Innenschirm (40) in einer solchen Lage angeordnet ist, daß Axialbewegung des äußeren Halterings (70) verhindert wird und so, daß die Innenumfangszähne (62) an der Außenumfangsfläche des Innenschirms (40) angreifen.

3. Sauerstoffsensor nach Anspruch 1, dadurch gekennzeichnet, daß das Haltemittel ein integrales Element (50') ist, welches einen inneren kegelstumpfförmigen Ringabschnitt (60') mit voneinander Abstand aufweisenden Innenumfangszähnen (62') mit Zwischenzahn-Nuten (63') enthält; einen äußeren kegelstumpfförmigen Ringabschnitt (70') mit Abstand voneinander aufweisenden Außenumfangszähnen (72') mit Zwischenzahn-Nuten (73'); und einen zurückgebogenen Ringflansch (65), der den inneren Halteringabschnitt (60') mit dem äußeren Halteringabschnitt (70') verbindet.

Fig. 1
Fig. 2
Fig. 3
Fig. 4
Fig. 5
Fig. 6
Fig. 7
Fig. 8